# EUROPÄISCHE PATENTSCHRIFT

(11) **EP 3 168 655 B1**
(45) Veröffentlichungstag und Bekanntmachung des Hinweises auf die Patenterteilung: **11.10.2017**
(21) Anmeldenummer: 16189564.4
(22) Anmeldetag: 20.09.2016
(51) Int. Cl.: G01V 8/20

(54) **LICHTGITTER UND VERFAHREN ZUM ERFASSEN VON OBJEKTEN**
LIGHT GRID AND METHOD FOR RECORDING OBJECTS
BARRIÈRES LUMINEUSES ET PROCÉDÉ DE DÉTECTION D'OBJETS

(30) Priorität: 10.11.2015 DE 102015119312
(43) Veröffentlichungstag der Anmeldung: 17.05.2017
(73) Patentinhaber: SICK AG, 79183 Waldkirch (DE)
(72) Erfinder: Eble, Dr. Johannes, 79183 Waldkirch (DE); Alt, Gerhard, 79350 Sexau (DE)

(56) Entgegenhaltungen:
- EP-A2- 2 374 985
- FR-A1- 3 025 642
- GB-A- 2 278 916

## Beschreibung

Die Erfindung betrifft ein Lichtgitter und ein Verfahren zum Erfassen von Objekten nach dem Oberbegriff von Anspruch 1 beziehungsweise 9.

Lichtgitter umfassen eine Vielzahl von Sendeelementen und zugeordneten Lichtempfängern, so dass jeweils ein Paar aus einem Lichtsender und einem Lichtempfänger eine Lichtschranke bildet, die erkennt, ob der zwischen dem Lichtsender und dem Lichtempfänger aufgespannte Licht- oder Überwachungsstrahl von einem Objekt unterbrochen ist oder nicht. Die Lichtsender und Lichtempfänger sind jeweils in einer Sendeeinheit und einer Empfangseinheit zusammengefasst, die einander gegenüber montiert werden. Es gibt auch Lichtgitter, in denen Lichtsender und Lichtempfänger in zwei einander gegenüberstehenden, gemischten Sende- und Empfangseinheiten untergebracht sind.

Die Vorstellung von Lichtstrahlen ist idealisiert. Tatsächlich erzeugen die Lichtsender Sendelichtkeulen, und die Lichtempfänger erfassen Licht innerhalb von Empfangslichtkeulen, wobei die Größe des Querschnitts dieser Keulen von den Öffnungswinkeln abhängt und mit dem Abstand zunimmt. Um die Justageanforderungen handhabbar zu halten, überlappen die Sende- und Empfangslichtkeulen aufgrund der Strahldivergenz regelmäßig nicht nur für die einander gegenüberliegend zugeordneten Lichtsender und Lichtempfänger, sondern auch für deren Nachbarn. Um Fehlauswertungen zu vermeiden, werden deshalb die Lichtsender und Lichtempfänger zyklisch aktiviert. Dabei werden nacheinander von jedem Lichtsender einzelne Lichtpulse oder Pakete ausgesandt, und für ein gewisses Zeitfenster wird nur der zugehörige Lichtempfänger aktiviert, um festzustellen, ob sich in dem jeweiligen Lichtstrahl ein Objekt befindet.

Ein Anwendungsfeld für Lichtgitter ist die Sicherheitstechnik. Die Lichtstrahlen dienen dabei als eine Art virtuelle Wand, und bei Unterbrechung durch ein Objekt wird beispielsweise eine Gefahrenquelle abgesichert. In der Automatisierungstechnik werden Lichtgitter ebenfalls zur Anwesenheitserkennung, aber auch zur Vermessung von Objekten eingesetzt, um die Position und Ausdehnung von Objekten anhand der Position und Anzahl unterbrochener Strahlen zu messen. Beispielsweise kann auf diesem Weg die Höhe von auf einem Förderband bewegten Objekten bestimmt werden.

Nachteilig bei Lichtgittern ist oft die begrenzte Auflösung. Man bezeichnet das kleinste noch detektierbare Objekt als MDO (minimal detectable object). Das MDO blockiert einen Lichtstrahl in jeder Position gerade noch so weit, dass das Empfangssignal unter die Schaltschwelle absinkt. Die Größe des MDO wird durch den gegenseitigen Abstand zweier benachbarter Lichtstrahlen begrenzt. Der Abstand zwischen je zwei Lichtsendern beziehungsweise Lichtempfängern wird auch als Raster bezeichnet. Befindet sich ein Objekt in einer Lücke zwischen zwei Lichtstrahlen, kann es nicht erkannt werden. Je kleiner das MDO sein soll, desto geringer muss der Strahlabstand sein.

Die naheliegende Möglichkeit, um das Auflösungsvermögen eines Lichtgitters zu erhöhen beziehungsweise kleinere Objekte zu detektieren, ist demnach eine Verringerung des Strahlabstands beziehungsweise eine Verkleinerung des Rasters, um die Lücke zwischen zwei benachbarten Lichtstrahlen zu verkleinern. Das erhöht aber die Kosten, denn es werden deutlich mehr Bauteile benötigt, beispielsweise doppelt so viele Lichtsender und Lichtempfänger pro Längeneinheit für eine Halbierung des Rasters.

Ein anderer Ansatz wird als Kreuzstrahltechnik bezeichnet. Dabei registrieren die Lichtempfänger nicht nur Sendelicht ihrer gegenüberliegend zugeordneten Lichtsender, sondern auch von weiteren, dazu benachbarten Lichtsendern. Auf diese Weise ergeben sich zusätzliche schräge oder gekreuzte Überwachungsstrahlen, mit denen Objekte zwischen den direkten, senkrecht ausgerichteten Überwachungsstrahlen erkannt werden. Die Anzahl erfassbarer gekreuzter Überwachungsstrahlen hängt von den Öffnungswinkeln, also dem Abstrahl- und Empfangswinkel oder dem Querschnitt der Sendelichtkeulen und Empfangslichtkeulen, sowie dem Abstand zwischen Sendeeinheit und Empfangseinheit ab.

Nachteilig bei der Kreuzstrahltechnik ist, dass sich die Auflösung nicht gleichmäßig über die von Überwachungsstrahlen gebildete Fläche erhöht. Es gibt Teilbereiche in unterschiedlichen Abständen zu der Sende- und Empfangseinheit, die von den zusätzlichen gekreuzten Strahlen mehr oder weniger profitieren. Da man das Auflösungsvermögen auf den schlechtesten Fall beziehen muss, ist der Gewinn an Auflösung sehr begrenzt und wird auch durch größere Öffnungswinkel, also Einbeziehen zusätzlicher gekreuzter Überwachungsstrahlen, nicht mehr überall und damit nicht für den schlechtesten Fall gesteigert.

Ein weiteres Verfahren gemäß EP 2 876 467 A1 kombiniert die Kreuzstrahltechnik mit einer Intensitätsauswertung, wodurch deutlich kleinere Objekte erfassbar werden. Allerdings setzt dieses Vorgehen voraus, dass die Lichtsender und Lichtempfänger dicht aneinander liegen. Wenn bei etwas größerem Raster die effektiven Strahlenbündel keine vollständige Abdeckung der zu überwachenden Fläche mehr gewährleisten, ist das Prinzip nicht anwendbar.

Die GB 2 278 916 A offenbart ein Absicherungssystem mit einer Art virtuellem Zaun aus durch Lichtgitter aufgespannten Segmenten. Das Lichtgitter wertet auch Kreuzstrahlen aus. In Bodennähe sind die Lichtsender und Lichtempfänger und damit die Überwachungsstrahlen dichter angeordnet als weiter oben.

In der EP 2 374 985 A2 wird ein motorisch angetriebenes Tor mit einer Sicherheitseinrichtung in Form eines Lichtgitters beschrieben, in dem die Lichtsender und Lichtempfänger Kanäle in unterschiedlichen Paarungen bilden. Das Raster der Kanäle kann innerhalb des Lichtgitters variieren, wobei konkret die Kanäle im unteren Bereich und damit in der Nähe der Schließposition dichter liegen.

Es ist daher Aufgabe der Erfindung, das Auflösungsvermögen eines Lichtgitters zu verbessern.

Diese Aufgabe wird durch ein Lichtgitter und ein Verfahren zum Erfassen von Objekten nach Anspruch 1 beziehungsweise 9 gelöst. In einem gattungsgemäßen Lichtgitter sind wie üblich zunächst zwei Reihen von gleichmäßig in einem Rasterabstand zueinander angeordneten Lichtsendern beziehungsweise Lichtempfängern vorgesehen. Längs der Verbindungslinien von Lichtsender zu direkt gegenüberliegendem Lichtempfänger bilden die direkten Überwachungsstrahlen zeilenartig ein zweidimensionales Überwachungsfeld. Das Lichtgitter arbeitet in Kreuzstrahltechnik, d.h. der jeweilige Öffnungswinkel ist groß genug, dass auch gekreuzte Überwachungsstrahlen zwischen Nachbarn der einander direkt gegenüberliegenden Lichtsender und Lichtempfänger gebildet werden.

Die Erfindung geht nun von dem Grundgedanken aus, einzelne zusätzliche Lichtsender und/oder Lichtempfänger in die Zwischenräume oder Lücken zwischen zwei auf dem Raster befindlichen Lichtsendern beziehungsweise Lichtempfängern einzusetzen. Einzeln bedeutet, dass deutlich weniger zusätzliche Lichtsender beziehungsweise Lichtempfänger vorhanden sind als in den beiden Reihen des ursprünglichen Lichtgitters. Eine Mindestanforderung ist, dass nicht alle Zwischenräume besetzt werden. Ansonsten resultierte lediglich ein feineres Raster. Das würde zwar auch die Auflösung erhöhen, jedoch würde der erfindungsgemäße Vorteil nicht verwirklicht, dies mit nur einzelnen zusätzlichen Bauteilen zu erreichen.

Die zusätzlichen Lichtsender beziehungsweise Lichtempfänger sind vorzugsweise gleichartig zu den Lichtsendern und Lichtempfängern auf dem Raster, und sie bilden damit zusätzliche gekreuzte Überwachungsstrahlen. Da sie in Zwischenräume und damit geringerem Abstand als dem Rasterabstand eingesetzt sind, verkleinern die zusätzlichen gekreuzten Überwachungsstrahlen die zuvor nicht überwachten Teilbereiche des Überwachungsfeldes. Die zusätzlichen gekreuzten Überwachungsstrahlen können je nach Ausführungsform allein durch zusätzliche Lichtsender, allein durch zusätzliche Lichtempfänger oder eine Mischung aus zusätzlichen Lichtsendern und Lichtempfängern erzeugt werden.

Die Erfindung hat den Vorteil, dass eine deutliche Auflösungsverbesserung erzielt werden kann, die sogar effektiv einer vollständigen Verfeinerung des Rasters entsprechen kann. Dazu müssen aber deutlich weniger Bauteile hinzugefügt werden als bei einer tatsächlichen Verfeinerung des Rasters. Die zusätzlichen Lichtsender und Lichtempfänger schließen mit ihren zusätzlichen gekreuzten Überwachungsstrahlen die ansonsten bei Kreuzstrahltechnik entstehenden Überwachungslücken insbesondere in der Mitte des Überwachungsfeldes. Deshalb wird ein deutlich kleineres MDO auch an ungünstigen Positionen wie in der Mitte zuverlässig erfasst.

Das Lichtgitter weist bevorzugt eine Steuer- und Auswertungseinheit auf, die dafür ausgebildet ist, die Überwachungsstrahlen nacheinander zu aktivieren, indem jeweils nur bestimmte Lichtsender und Lichtempfänger gleichzeitig aktiviert werden. Dies dient dazu, ungewolltes Übersprechen zwischen den Überwachungsstrahlen zu verhindern. Dabei sind verschiedene Schemata denkbar. Vorzugsweise werden die Lichtsender zyklisch nacheinander aktiviert und mit dem jeweils aktiven Lichtsender durch gleichzeitige Aktivierung eines oder mehrerer von dem Lichtsender beleuchteter Lichtempfänger einzelne oder mehrere Überwachungsstrahlen gebildet. Bei längeren Lichtgittern mit vielen Lichtsendern und Lichtempfängern kann das Aktivierungsschema gruppenweise wiederholt werden, wobei dann beispielsweise mehrere Lichtsender in untereinander zur Vermeidung gegenseitiger Beeinflussung ausreichendem Abstand gleichzeitig aktiv sind. Die Auswertungseinheit erkennt vorzugsweise auch anhand des Empfangssignals des jeweils aktiven Lichtempfängers, ob der Überwachungsstrahl unterbrochen ist, und stellt so die Anwesenheit eines Objekts in diesem Überwachungsstrahl fest.

Ein bevorzugtes Aktivierungsschema sieht vor, in einem ersten zyklischen Aktivierungsdurchlauf durch die Lichtsender die direkten Überwachungsstrahlen durch Aktivieren des einen gegenüberliegenden Lichtempfängers und in einem zweiten Durchlauf sämtliche gekreuzten Überwachungsstrahlen durch Aktivieren aller weiteren von dem Lichtsender beleuchteten Lichtempfänger zu bilden. Prinzipiell können direkter Überwachungsstrahl und gekreuzte Überwachungsstrahlen auch in einem einzigen Durchlauf gebildet werden, indem alle zu einem Lichtsender gehörigen Lichtempfänger zugleich aktiviert werden.

Die Zwischenräume mit zusätzlichen Lichtsendern und/oder Lichtempfängern sind bevorzugt untereinander mindestens im doppelten Rasterabstand angeordnet. Wenn also ein Zwischenraum mit einem zusätzlichen Lichtsender beziehungsweise Lichtempfänger besetzt ist, wird zumindest der nächste Zwischenraum freigelassen. Je nach Öffnungswinkel und damit Anzahl möglicher gekreuzter Überwachungsstrahlen je Lichtsender oder Lichtempfänger kann statt des doppelten sogar der drei- oder allgemein n-fache Rasterabstand ausreichen.

Die Anzahl der zusätzlichen Lichtsender und/oder zusätzlichen Lichtempfänger beträgt bevorzugt höchstens 50%, höchstens 20% oder höchstens 10% der Anzahl erster Lichtsender und erster Lichtempfänger. Damit wird genauer quantifiziert, was unter einzelnen zusätzlichen Lichtsendern beziehungsweise Lichtempfängern zu verstehen ist. Je weniger zusätzliche Bauteile eingesetzt werden, desto höher ist der Nutzen durch geringeren Herstellungsaufwand. Die erreichbare spärliche Besetzung hängt insbesondere vom Öffnungswinkel der Lichtsender und Lichtempfänger sowie dem Abstand zwischen Lichtsender und Lichtempfänger ab, denn davon hängt der Einflussbereich der zusätzlichen gekreuzten Überwachungsstrahlen ab.

Der mindestens eine zusätzliche Lichtsender und/oder Lichtempfänger ist bevorzugt in der Mitte des Zwischenraums angeordnet. Dadurch wird eine maximale Auflösungserhöhung mit nur einem zusätzlichen Bauteil erzielt.

Ein Zwischenraum mit zusätzlichen Lichtsendern und/oder Lichtempfängern ist bevorzugt am Rand der Vielzahl von ersten Lichtsendern und/oder ersten Lichtempfängern angeordnet. In einer Draufsicht auf das Überwachungsfeld liegt dann ein Ursprung für zusätzliche gekreuzte Überwachungsstrahlen am oberen und/oder unteren Rand. Denn ansonsten können sich an diesen Rändern Überwachungslücken zeigen, die auch durch zusätzliche Lichtsender beziehungsweise Lichtempfänger in den andern Zwischenräumen nicht ausgleichbar sind.

In bevorzugter Weiterbildung sind mehrere zusätzliche Lichtsender und/oder mehrere zusätzliche Lichtempfänger in demselben Zwischenraum angeordnet. Mit einem zusätzlichen Lichtsender beziehungsweise Lichtempfänger kann eine doppelte Subrasterauflösung erzielt werden. Durch weitere zusätzliche Lichtsender beziehungsweise Lichtempfänger sind auch noch größere Faktoren erreichbar, wobei innerhalb des Zwischenraums vorzugsweise ein gleichmäßiger Abstand eingehalten wird, beispielsweise durch zwei zusätzliche Lichtsender beziehungsweise Lichtempfänger auf einem Drittel beziehungsweise zwei Drittel des Rasterabstands und entsprechend für Ausführungsformen mit höheren Anzahlen. An der spärlichen Besetzung von Zwischenräumen an sich ändert sich nichts. Weiterhin bleiben die meisten Zwischenräume unbesetzt, wie dies oben in verschiedenen Varianten erläutert wurde.

Den Lichtsendern und den Lichtempfängern ist bevorzugt jeweils ein Abstandselement zugeordnet, welches den Anfangs- und Endbereich der Überwachungsstrahlen verdeckt. Bei der Kreuzstrahltechnik ergibt sich nämlich das Problem, dass die gekreuzten Überwachungsstrahlen jeweils bündelweise denselben Ursprung in einem Lichtsender beziehungsweise Lichtempfänger haben. Deshalb gibt es im Nahbereich Überwachungslücken, in denen die gekreuzten Überwachungsstrahlen wenig zur Auflösungserhöhung beitragen. Deshalb kann es vorteilhaft sein, wenn der Nahbereich nicht zum Überwachungsfeld gehört. Das wird durch die Abstandselemente erreicht, also beispielsweise eine Art Verblendung oder eine versenkte Anordnung der Lichtsender und Lichtempfänger in einem Gehäuse, die den aktiven Überwachungsbereich entsprechend einschränken.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines Lichtgitters;
- Fig. 2: eine Darstellung der Überwachungsstrahlen bei herkömmlicher Kreuzstrahltechnik;
- Fig. 3: eine Darstellung der Überwachungsstrahlen in einer erfindungsgemäßen Ausführungsform mit einzelnen zusätzlichen Lichtsendern und Lichtempfängern;
- Fig. 4: eine Darstellung ähnlich Figur 3 jedoch ausschließlich mit zusätzlichen Lichtsendern;
- Fig. 5: eine Darstellung ähnlich Figur 4 jedoch ausschließlich mit zusätzlichen Lichtempfängern; und
- Fig. 6: eine Darstellung der Überwachungsstrahlen in einer weiteren erfindungsgemäßen Ausführungsform mit mehreren zusätzlichen Lichtsendern und Lichtempfängern im selben Zwischenraum zur weiteren Auflösungserhöhung.

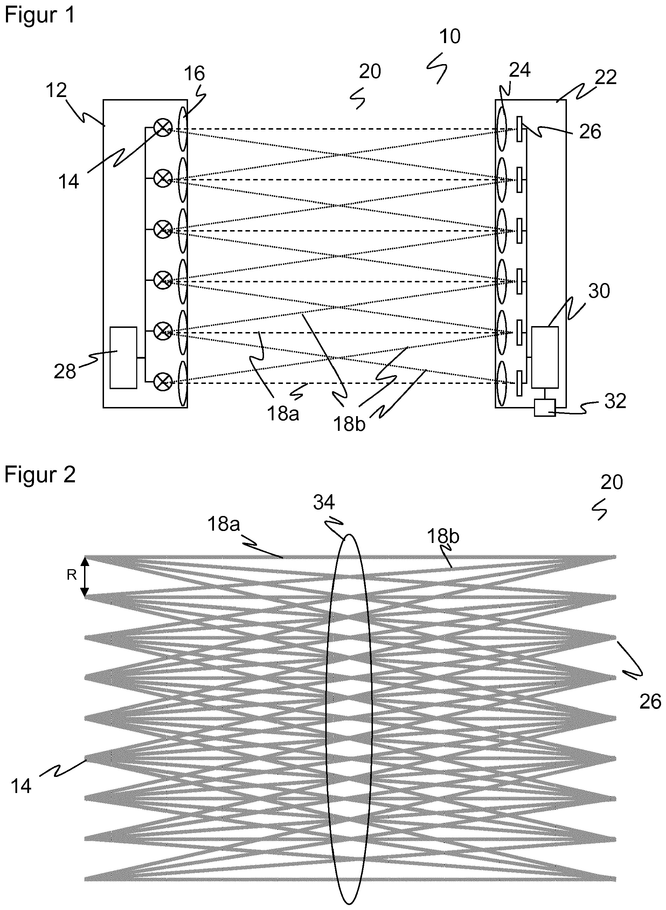

Figur 1 zeigt eine schematische Querschnittsdarstellung eines Lichtgitters 10. Eine Sendeeinheit 12 umfasst eine Vielzahl in einer Reihe angeordneter Lichtsender 14, beispielsweise LEDs oder Laser im infraroten oder einem anderen Spektrum. Das Licht der Lichtsender 14 wird jeweils durch eine nachgeordnete Sendeoptik 16 als Überwachungsstrahl 18a-b durch einen Überwachungsbereich 20 zu einer Empfangseinheit 22 gesandt. Die Überwachungsstrahlen 18a-b treffen jeweils über eine Empfangsoptik 24 auf einen Lichtempfänger 26, der meist als Fotodiode ausgebildet ist, alternativ aber auch ein ortsauflösender CCD- oder CMOS-Bildsensor sein kann. Je nach Anwendung und Ausführungsform kann auch auf die Sendeoptiken 16 und Empfangsoptiken 24 verzichtet werden.

Das Lichtgitter 10 nutzt die Kreuzstrahltechnik. Das bedeutet, dass nicht nur direkte Überwachungsstrahlen 18a von einem Lichtsender 14 zu einem direkt gegenüberliegenden Lichtempfänger 26, sondern auch gekreuzte Überwachungsstrahlen 18b zwischen benachbarten Lichtsendern 14 und Lichtempfängern 26 gebildet werden. Dazu weisen die Lichtsender 14 und Lichtempfänger 26 beziehungsweise deren Sendeoptiken 16 und Empfangsoptiken 24 entsprechend große Öffnungswinkel auf. Direkte Überwachungsstrahlen 18a und gekreuzte Überwachungsstrahlen 18b unterscheiden sich nur durch ihre Lage, nicht in ihrer Funktion. In der Darstellung der Figur 1 werden jeweils nur die direkten Nachbarn überstrahlt. Je nach Öffnungswinkeln und Abstand zwischen Sendeeinheit 12 und Empfangseinheit 22 können auch gekreuzte Überwachungsstrahlen 18b mit zusätzlichen Nachbarn gebildet werden.

In der Sendeeinheit 12 ist eine Sendersteuerung 28 mit den Lichtsendern 14 verbunden, um bestimmte Lichtsender 14 mit Sendemustern, beispielsweise Pulsen oder Pulsfolgen zu aktivieren. Entsprechend ist in der Empfangseinheit 22 eine Auswertungseinheit 30 mit den Lichtempfängern 26 verbunden, um deren Empfangssignale auszuwerten. Es werden jeweils gleichzeitig nur ein Lichtsender 14 und ein Lichtempfänger 26, somit nur ein Überwachungsstrahl 18a-b aktiviert. Außerhalb der Nachbarschaft, wenn also Mehrdeutigkeiten durch genügend Abstand sicher verhindert sind, können abweichend auch weitere Überwachungsstrahlen 18a-b parallel aktiviert werden. Damit Lichtsender 14 und Lichtempfänger 26 gleichzeitig aktiviert werden können, ist eine Synchronisation zwischen Sendersteuerung 26 und Auswertungseinheit 30 erforderlich. Dies kann leitungsgebunden oder optisch erfolgen und wird hier nicht näher beschrieben, weil es an sich bekannt ist.

Die Sequenz, mit der die Überwachungsstrahlen 18a-b zyklisch nacheinander aktiviert werden, ist im Prinzip beliebig, aber der Übersicht halber bietet es sich an, eine äußere Schleife über alle Lichtsender 14 und eine innere Schleife über die mit dem jeweiligen Lichtsender 14 Überwachungsstrahlen 18a-b bildenden Lichtempfänger 26 zu durchlaufen oder umgekehrt. Für den jeweils aktiven Überwachungsstrahl 18a-b wird anhand des Empfangssignals festgestellt, beispielsweise durch einen Schwellenvergleich, ob ein Objekt den Überwachungsstrahl 18a-b unterbricht. Somit stellt das Lichtgitter 10 fest, ob sich ein Objekt in dem Überwachungsbereich 20 befindet. Eine gewisse Positions- oder Höheninformation lässt sich daraus ablesen, welche Überwachungsstrahlen 18a-b die Unterbrechung detektiert haben, aber wegen des schrägen Verlaufs der gekreuzten Überwachungsstrahlen 18b hängt dies auch noch vom unbekannten Abstand zu Sendeeinheit 12 beziehungsweise Empfangseinheit 22 ab. Das Lichtgitter 10 stellt das Erfassungsergebnis, also beispielsweise ein Schaltsignal je nach An- oder Abwesenheit von Objekten in dem Überwachungsbereich oder eine zumindest grobe Positions- oder Geometrieinformation, an einem Ausgang 32 bereit.

Figur 2 zeigt die Überwachungsstrahlen 18a-b bei herkömmlicher Kreuzstrahltechnik. Dabei sind die meisten Elemente des Lichtgitters 10 hier und in den folgenden Figuren der Übersicht halber weggelassen und die Lichtsender 14 und Lichtempfänger 26 nur als Ursprung der Überwachungsstrahlen 18a-b gezeigt. In Figur 2 sind die Öffnungswinkel und Abstände so gewählt, dass jeweils ein Lichtsender 14 sieben Lichtempfänger 26 beleuchtet beziehungsweise umgekehrt ein Lichtempfänger 26 jeweils sieben Lichtsender 14 erfasst. Das gilt natürlich nicht in den Randlagen, und ohnehin ist die Anzahl rein beispielhaft.

Der Rasterabstand R zwischen je zwei Lichtsendern 14 oder Lichtempfängern 26 würde für ein klassisches Lichtgitter ohne Kreuzstrahltechnik direkt die Auflösung bestimmen. Durch die gekreuzten Überwachungsstrahlen 18b wird der Überwachungsbereich 20 viel dichter durchsetzt. Allerdings ist die Auflösung nicht überall verbessert. Insbesondere gibt es einen Bereich in der Mitte, der durch eine Ellipse 34 hervorgehoben ist, in dem zwar die Auflösung um einen Faktor zwei verbessert ist. Jedoch genügen dafür bereits die ersten Nachbarn eines jeden Lichtsenders 14 beziehungsweise Lichtempfängers 26 und deren gekreuzte Überwachungsstrahlen 18b. Die weiteren Nachbarn mit ihren gekreuzten Überwachungsstrahlen 18b erhöhen das Auflösungsvermögen an vielen Stellen, bringen aber in der Mitte keine Verbesserung mehr. Das schlägt sich direkt auf die Auflösung insgesamt nieder, die sich sinnvollerweise über ein MDO an beliebiger Position definiert.

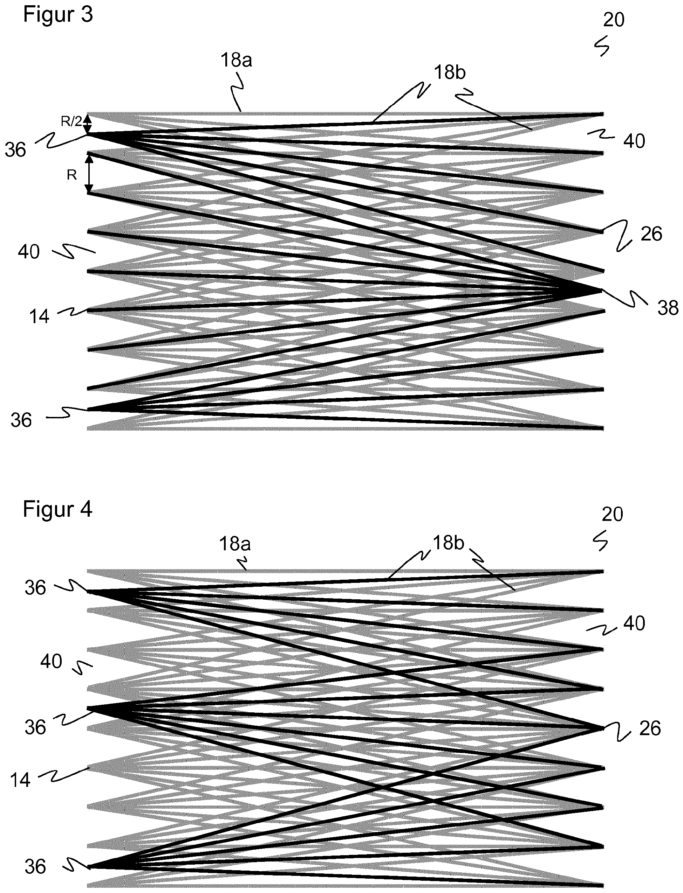

Figur 3 zeigt eine Darstellung der Überwachungsstrahlen 18a-b in einer erfindungsgemäßen Ausführungsform. Dabei sind einzelne zusätzliche Lichtsender 36 und zusätzliche Lichtempfänger 38 in die Zwischenräume 40 des regelmäßigen Rasters der Lichtsender 14 und Lichtempfänger 26 eingesetzt. Die bevorzugte Position innerhalb eines Zwischenraums 40 ist mittig bei R/2. Die zusätzlichen Lichtsender 36 und Lichtempfänger 38 sind vorzugsweise baugleich zu den übrigen Lichtsendern 14 beziehungsweise Lichtempfängern 26 einschließlich der Sendeoptiken 16 und Empfangsoptiken 24 und werden gleichberechtigt in das Aktivierungsschema eingebunden. Es bilden sich also zusätzliche gekreuzte Überwachungsstrahlen 18b, die in Figur 3 rein zur Veranschaulichung dunkel gezeichnet sind.

Es werden nur einige vereinzelte zusätzliche Lichtsender 36 und Lichtempfänger 38 benötigt. Viele oder sogar die meisten Zwischenräume 40 bleiben also frei. Es können die Hälfte beziehungsweise auch höchstens 20% oder sogar nur höchstens 10% zusätzliche Lichtsender 36 beziehungsweise Lichtempfänger 38 gegenüber den rasterbildenden Lichtsendern 14 und Lichtempfängern 26 genügen. Die benötigte Anzahl hängt hauptsächlich von der Anzahl der Auskreuzungen ab, d.h. der Anzahl Überwachungsstrahlen 18a-b, die von einem Lichtsender 14 ausgehen beziehungsweise sich in einem Lichtempfänger 26 treffen. Die Anzahl möglicher Auskreuzungen wiederum ist, wie mehrfach erwähnt, von den Öffnungswinkeln und dem Abstand zwischen Sendeeinheit 12 und Empfangseinheit 22 abhängig, wobei natürlich auch Sendesteuerung 28, Auswertungseinheit 30 und sonstige Elektronik daran angepasst werden.

Die zusätzlichen Lichtsender 36 und Lichtempfänger 38 werden vorzugsweise so angeordnet, dass jede zuvor von Überwachungsstrahlen 18a-b freie Stelle in der Mitte von mindestens einem der zusätzlich entstehenden Überwachungsstrahlen 18b getroffen wird. In dem Beispiel der Figur 3 trifft jeweils der äußerste gekreuzte Überwachungsstrahl 18b der zusätzlichen Lichtsender 36 auf die direkten Nachbarn des zusätzlichen Lichtempfängers 38. Entsprechend empfängt der zusätzliche Lichtempfänger 38 gerade noch die äußersten gekreuzten Überwachungsstrahlen 18b der direkten Nachbarn der zusätzlichen Lichtsender 36. Dadurch wird ressourcenschonend jede zuvor von Überwachungsstrahlen 18a-b freie Stelle in der Mitte gerade einmal von einem zusätzlichen Überwachungsstrahl 18b durchstochen. Dies geschieht wegen der mittigen Positionierung der zusätzlichen Lichtsender 36 und Lichtempfänger 38 bei R/2 auch in der Mitte und ergibt damit eine Verbesserung der Auflösung um ungefähr einen weiteren Faktor zwei, wobei das noch von der Schaltschwelle abhängen kann. Mit nur ganz wenigen zusätzlichen Bauteilen wird also effektiv die Auflösung eines Lichtgitters mit doppelt so feinem Rasterabstand R erzielt. Nicht optimale andere, auch dichtere oder vereinzeltere Anordnungen von zusätzlichen Lichtsendern 36 und Lichtempfängern 38 sowie Abweichungen von der Mitte eines Zwischenraums 40 bei R/2 sind auch denkbar. Das gilt insbesondere dann, wenn nur an bestimmten Stellen eine erhöhte Auflösung gefordert ist.

Um die oberste und unterste freie Stelle in der Mitte des Überwachungsbereichs 20 mit zusätzlichen gekreuzten Überwachungsstrahlen 18b zu durchstechen, sollte vorzugsweise ein zusätzlicher Lichtsender 36 oder Lichtempfänger 38 in dem obersten und untersten Zwischenraum 40 angeordnet sein.

Übrigens erkennt man in Figur 3, dass nicht nur in der Mitte, sondern auch bei ca. 1/3 beziehungsweise 2/3 des Überwachungsbereichs Lücken auftreten, die nicht von Überwachungsstrahlen 18a-b durchsetzt sind. Durch die zusätzlichen Lichtsender 36 und Lichtempfänger 38 werden die Lücken in der Mitte in ihren Abmessungen ungefähr dazu vergleichbar.

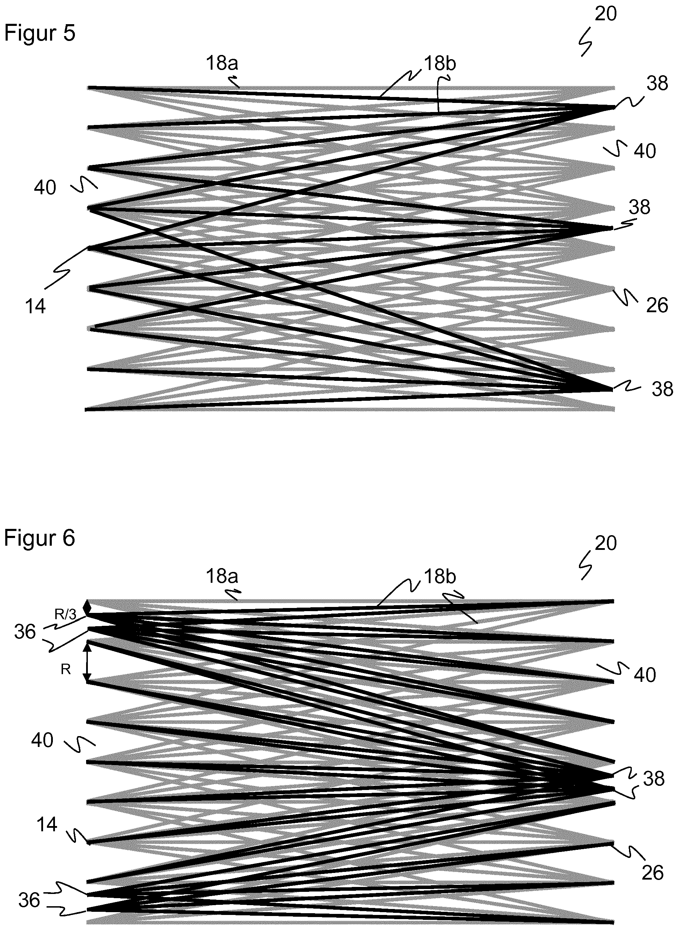

Die Figuren 4 und 5 zeigen weitere Ausführungsformen ähnlich Figur 3. Damit wird illustriert, dass es genügt, wie in Figur 4 ausschließlich zusätzliche Lichtsender 36 oder wie in Figur 5 ausschließlich zusätzliche Lichtempfänger 38 bei vergleichbarem baulichem Aufwand und gleichem Auflösungsgewinn zu verwenden. Selbstverständlich sind weitere Mischformen denkbar.

Figur 6 zeigt nochmals eine andere Ausführungsform, in der ein und derselbe Zwischenraum 40 mit mehreren zusätzlichen Lichtsendern 36 beziehungsweise Lichtempfängern 38 besetzt wird. Im dargestellten Beispiel sind es zwei in gleichmäßigem Abstand, also bei 1/3 R und 2/3 R. Das MDO wird dabei sogar um einen Faktor 3 verbessert. Bei noch größerer Anzahl n erhöht sich der Faktor auf n+1 bei gleichmäßiger Anordnung, von der aber auch abgewichen werden kann.

An der spärlichen Besetzung, also einer großen Anzahl von Zwischenräumen 40 ohne zusätzliche Lichtsender 36 oder Lichtempfänger 38, ändert sich hier nichts. Auch sind alle mit mehr zusätzlichen Lichtsendern 36 oder mehr zusätzlichen Lichtempfängern 38 bis hin zu den Extremen ganz ohne zusätzliche Lichtempfänger 38 oder ganz ohne zusätzliche Lichtsender 36 analog Figur 4 und 5 denkbar.

Wie man in Figur 6 erkennt, definiert sich die Auflösung dort nicht mehr durch die Mitte, sondern durch die Lücken bei ca. 1/3 und 2/3 des Überwachungsbereichs 20. Durch mehr zusätzliche Lichtsender 36 und Lichtempfänger können diese Lücken verkleinert und damit die Auflösung weiter verbessert werden. In Figur 6 könnte man dazu jeweils ein zusätzliches Paar Lichtsender 36 in der Mitte und zwei zusätzliche Paare Lichtempfänger 38 am Rand anordnen, wobei auch das natürlich nur ein Beispiel ist.

Wie man in den Figuren 3 bis 6 sieht, ist trotz der Verwendung zahlreicher gekreuzter Überwachungsstrahlen 18b im Nahbereich direkt bei der Sendeeinheit 12 beziehungsweise der Empfangseinheit 22 die Auflösung gegenüber den direkten Überwachungsstrahlen 18a allein kaum verbessert. Deshalb kann es vorteilhaft sein, den Nahbereich von der Überwachungsaufgabe auszuschließen. Die kann baulich erzwungen werden, indem der Nahbereich durch Abstandselemente verblendet wird, die einen Objekteingriff physisch verhindern. Derselbe Effekt wird erzielt, wenn die Lichtsender 14, 36 und Lichtempfänger 26, 38 jeweils in einem Gehäuse der Sendeeinheit 12 beziehungsweise der Empfangseinheit 22 versenkt angeordnet werden.

## Patentansprüche

1. Lichtgitter (10) mit einer Vielzahl von gleichmäßig mit einem Rasterabstand zueinander angeordneten ersten Lichtsendern (14) und einer Vielzahl von jeweils den ersten Lichtsendern (14) gegenüberliegenden, gleichmäßig in dem Rasterabstand zueinander angeordneten ersten Lichtempfängern (26), die zwischen sich direkte Überwachungsstrahlen (18a) bilden, wobei zudem die ersten Lichtsender (14) und ersten Lichtempfänger (26) einen Öffnungswinkel aufweisen, bei dem auch gekreuzte Überwachungsstrahlen (18b) mit Nachbarn einander zugeordneter erster Lichtsender (14) und erster Lichtempfänger (26) gebildet werden,
**dadurch gekennzeichnet,**
**dass** mindestens ein zusätzlicher Lichtsender (36) in einem Zwischenraum (40) zwischen zwei ersten Lichtsendern (14) und/oder mindestens ein zusätzlicher Lichtempfänger (38) in einem Zwischenraum (40) zwischen zwei ersten Lichtempfängern (26) angeordnet ist, wobei nur in einem Teil der Zwischenräume (40) zusätzliche Lichtsender (36) und/oder Lichtempfänger (38) angeordnet sind und dass jede von Überwachungsstrahlen (18a-b) der ersten Lichtsender (14) und ersten Lichtempfänger (26) freie Stelle in der Mitte zwischen ersten Lichtsendern (14) und ersten Lichtempfängern (26) von mindestens einem der durch die zusätzlichen Lichtsender (36) und/oder zusätzlichen Lichtempfänger (38) zusätzlich entstehenden Überwachungsstrahlen (18b) getroffen wird und sich so die Auflösung des Lichtgitters (10) mit nur wenigen zusätzlichen Bauteilen erhöht.

2. Lichtgitter (10) nach Anspruch 1,
das eine Steuer- und Auswertungseinheit aufweist (28, 30), die dafür ausgebildet ist, die Überwachungsstrahlen (18a-b) nacheinander zu aktivieren, indem jeweils nur bestimmte Lichtsender (14, 36) und Lichtempfänger (26, 38) gleichzeitig aktiviert werden.

3. Lichtgitter (10) nach Anspruch 1 oder 2,
wobei die Zwischenräume (40) mit zusätzlichen Lichtsendern (36) und/oder Lichtempfängern (38) untereinander mindestens im doppelten Rasterabstand (2R) angeordnet sind.

4. Lichtgitter (10) nach einem der vorherigen Ansprüche,
wobei die Anzahl der zusätzlichen Lichtsender (36) und/oder zusätzlichen Lichtempfänger (38) höchstens 50%, höchstens 20% oder höchstens 10% der Anzahl erster Lichtsender (14) und erster Lichtempfänger (26) beträgt.

5. Lichtgitter (10) nach einem der vorhergehenden Ansprüche,
wobei der mindestens eine zusätzliche Lichtsender (36) und/oder Lichtempfänger (38) in der Mitte des Zwischenraums (40) angeordnet ist.

6. Lichtgitter (10) nach einem der vorhergehenden Ansprüche,
wobei ein Zwischenraum (40) mit zusätzlichen Lichtsendern (36) und/oder Lichtempfängern (38) am Rand der Vielzahl von ersten Lichtsendern (14) und/oder ersten Lichtempfänger (26) angeordnet ist.

7. Lichtgitter (10) nach einem der vorhergehenden Ansprüche,
wobei mehrere zusätzliche Lichtsender (36) und/oder mehrere zusätzliche Lichtempfänger (38) in demselben Zwischenraum (40) angeordnet sind.

8. Lichtgitter (10) nach einem der vorhergehenden Ansprüche,
wobei den Lichtsendern (14, 36) und den Lichtempfängern (26, 38) jeweils ein Abstandselement zugeordnet ist, welches den Anfangs- und Endbereich der Überwachungsstrahlen (18a-b) verdeckt.

9. Verfahren zum Erfassen von Objekten, bei dem mit Hilfe einer Vielzahl von gleichmäßig mit einem Rasterabstand zueinander angeordneten ersten Lichtsendern (14) und einer Vielzahl von jeweils den ersten Lichtsendern (14) gegenüberliegend zugeordneten, gleichmäßig in dem Rasterabstand zueinander angeordneten ersten Lichtempfängern (26) direkte Überwachungsstrahlen (18a) zwischen erstem Lichtsender (14) und zugeordnetem erstem Lichtempfänger (26) sowie gekreuzte Überwachungsstrahlen (18b) mit Nachbarn einander zugeordneter erster Lichtsender (14) und erster Lichtempfänger (26) gebildet werden und aus der Unterbrechung eines Überwachungsstrahls (18a-b) auf die Anwesenheit eines Objekts geschlossen wird,
**dadurch gekennzeichnet,**
**dass** mit Hilfe mindestens eines zusätzlichen Lichtsenders (36), der in einem Zwischenraum (40) zwischen zwei ersten Lichtsendern (14) angeordnet ist, und/oder mindestens eines zusätzlichen Lichtempfängers (38), der in einem Zwischenraum (40) zwischen zwei ersten Lichtempfängern (26) angeordnet ist, weitere gekreuzte Überwachungsstrahlen (18b) zur Auflösungserhöhung gebildet werden, wobei nur in einem Teil der Zwischenräume (40) zusätzliche Lichtsender (36) und/oder Lichtempfänger (38) angeordnet sind und dass jede von Überwachungsstrahlen (18a-b) der ersten Lichtsender (14) und ersten Lichtempfänger (26) freie Stelle in der Mitte zwischen ersten Lichtsendern (14) und ersten Lichtempfängern (26) von mindestens einem der durch die zusätzlichen Lichtsender (36) und/oder zusätzlichen Lichtempfänger (38) zusätzlich entstehenden Überwachungsstrahlen (18b) getroffen wird und sich so die Auflösung des Lichtgitters (10) mit nur wenigen zusätzlichen Bauteilen erhöht.

## Claims

1. A light grid (10) having a plurality of first light transmitters (14) which are arranged with an equidistant mutual grid distance and a plurality of first light receivers (26) which are arranged opposite the respective first light transmitters (14) with the equidistant grid distance, forming direct monitoring beams (18a) between one another, wherein the first light transmitters (14) and first light receivers (26) additionally have an aperture angle where also crossing monitoring beams (18b) with neighbors of mutually assigned first light transmitters (14) and first light receivers (26) are formed,
**characterized in that** at least one additional light transmitter (36) is arranged in an intermediate space (40) between two first light transmitters (14) and/or at least one additional light receiver (38) is arranged in an intermediate space (40) between two first light receivers (26), wherein additional light transmitters (36) and/or light receivers (38) are only arranged in a part of the intermediate spaces (40), and **in that** any position in the middle of the first light transmitters (14) and the first light receivers (26) which is free from monitoring beams (18a-b) of the first light transmitters (14) and first light receivers (26) is passed by at least one additional monitoring beam (18b) generated by the additional light transmitters (36) and/or additional light receivers (38), so that the resolution of the light grid (10) is increased with only a few additional components.

2. The light grid (10) according to claim 1,
comprising a control and evaluation unit (28, 30) which is configured to activate the monitoring beams (18a-b) one after the other by activating only certain light transmitters (14, 36) and light receivers (26, 38) at a same time.

3. The light grid (10) according to claim 1 or 2,
wherein the intermediate spaces (40) having additional light transmitters (36) and/or light receivers (38) are mutually arranged having at least twice the equidistant mutual grid distance (2R).

4. The light grid (10) according to any of the preceding claims,
wherein the number of additional light transmitters (36) and/or additional light receivers (38) is at most 50%, at most 20% or at most 10% of the number of first light transmitters (14) and first light receivers (26).

5. The light grid (10) according to any of the preceding claims,
wherein the at least one additional light transmitter (36) and/or light receiver (38) is arranged in the middle of the intermediate space (40).

6. The light grid (10) according to any of the preceding claims,
wherein an intermediate space (40) having an additional light transmitter (36) and/or light receiver (38) is arranged at the edge of the plurality of first light transmitters (14) and/or light receivers (26).

7. The light grid (10) according to any of the preceding claims,
wherein several additional light transmitters (36) and/or several additional light receivers (38) are arranged in the same intermediate space (40).

8. The light grid (10) according to any of the preceding claims,
wherein a respective spacing element is assigned to the light transmitters (14, 36) and the light receivers (26, 38) which covers the beginning and end region of the monitoring beams (18a-b).

9. A method for detecting objects, wherein, by means of a plurality of first light transmitters (14) which are arranged with an equidistant mutual grid distance and a plurality of first light receivers (26) which are arranged opposite the respective first light transmitters (14) with the equidistant grid distance, direct monitoring beams (18a) between first light transmitter (14) and the assigned first light receiver (26) as well as crossing monitoring beams (18b) with neighbors of mutually assigned first light transmitters (14) and first light receivers (26) are formed, and presence of an object is detected from an interruption of a monitoring beam (18a-b),
**characterized in that**, by means of at least one additional light transmitter (36) which is arranged in an intermediate space (40) between two first light transmitters (14) and/or at least one additional light receiver (38) which is arranged in an intermediate space (40) between two first light receivers (26), additional crossing beams (18b) are formed in order to increase the resolution, wherein additional light transmitters (36) and/or light receivers (38) are only arranged in a part of the intermediate spaces (40), and **in that** any position in the middle of the first light transmitters (14) and the first light receivers (26) which is free from monitoring beams (18a-b) of the first light transmitters (14) and first light receivers (26) is passed by at least one additional monitoring beam (18b) generated by the additional light transmitters (36) and/or additional light receivers (38), so that the resolution of the light grid (10) is increased with only a few additional components.

## Revendications

1. Grille lumineuse (10) comportant une pluralité de premiers émetteurs de lumière (14) agencés régulièrement les uns par rapport aux autres à un pas de trame et une pluralité de premiers récepteurs de lumière (26) opposés aux premiers émetteurs de lumière (14) et agencés régulièrement les uns par rapport aux autres au pas de trame, qui forment entre eux des rayons de surveillance directs (18a), et de plus les premiers émetteurs de lumière (14) et les premiers récepteurs de lumière (26) présentent un angle d'ouverture sous lequel se forment également des rayons de surveillance croisés (18b) avec les voisins de premiers émetteurs de lumière (14) et de premiers récepteurs de lumière (26) associés les uns aux autres,
**caractérisée en ce que**
il est prévu au moins un émetteur de lumière supplémentaire (36) dans un intervalle (40) entre deux premiers émetteurs de lumière (14) et/ou au moins un récepteur de lumière supplémentaire (38) dans un intervalle (40) entre deux premiers récepteurs de lumière (26), et uniquement dans une partie des intervalles (40) sont prévus des émetteurs de lumière supplémentaires (36) et/ou des récepteurs de lumière supplémentaires (38), et **en ce que** chaque emplacement dépourvu de rayons de surveillance (18a-b) des premiers émetteurs de lumière (14) et des premiers récepteurs de lumière (26) est frappé par l'un au moins des rayons de surveillance (18b) formés en supplément par les émetteurs de lumière supplémentaires (36) et/ou par les récepteurs de lumière supplémentaires (38), au milieu entre les premiers émetteurs de lumière (14) et les premiers récepteurs de lumière (26), et la résolution de la grille lumineuse (10) est ainsi augmentée par un petit nombre seulement de composants supplémentaires.

2. Grille lumineuse (10) selon la revendication 1,
qui comprend une unité de commande et d'évaluation (28, 30) conçue pour activer les rayons de surveillance (18a-b) successivement en n'activant que certains émetteurs de lumière respectifs (14, 36) et certaines récepteurs de lumière respectifs (26, 38) simultanément.

3. Grille lumineuse (10) selon la revendication 1 ou 2,
dans laquelle les intervalles (40) pourvus d'émetteurs de lumière supplémentaires (36) et/ou de récepteurs de lumière supplémentaires (38) sont disposés les uns par rapport aux autres au moins au double pas de trame (2R).

4. Grille lumineuse (10) selon l'une des revendications précédentes,
dans laquelle le nombre d'émetteurs de lumière supplémentaires (36) et/ou de récepteurs de lumière supplémentaires (38) est au plus de 50 %, au plus de 20 % ou au plus de 10 % du nombre des premiers émetteurs de lumière (14) et des premiers récepteurs de lumière (26).

5. Grille lumineuse (10) selon l'une des revendications précédentes,
dans laquelle ledit au moins un émetteur de lumière supplémentaire (36) et/ou ledit au moins un récepteur de lumière supplémentaire (38) est agencé au milieu de l'intervalle (40).

6. Grille lumineuse (10) selon l'une des revendications précédentes,
dans laquelle un intervalle (40) pourvu d'émetteurs de lumière supplémentaires (36) et/ou de récepteurs de lumière supplémentaires (38) est agencé au bord de la pluralité de premiers émetteurs de lumière (14) et/ou de premiers récepteurs de lumière (26).

7. Grille lumineuse (10) selon l'une des revendications précédentes,
dans laquelle plusieurs émetteurs de lumière supplémentaires (36) et/ou plusieurs récepteurs de lumière supplémentaires (38) sont agencés dans le même intervalle (40).

8. Grille lumineuse (10) selon l'une des revendications précédentes,
dans laquelle un élément écarteur respectif est associé aux émetteurs de lumière (14, 36) et aux récepteurs de lumière (26, 38), qui recouvre la zone de départ et la zone d'extrémité des rayons de surveillance (18a-b).

9. Procédé de détection d'objets dans lequel, à l'aide d'une pluralité de premiers émetteurs de lumière (14) agencés régulièrement les uns par rapport aux autres à un pas de trame et d'une pluralité de premiers récepteurs de lumière (26) opposés aux premiers émetteurs de lumière (14) et agencés régulièrement les uns par rapport aux autres au pas de trame, on forme des rayons de surveillance directs (18a) entre le premier émetteur de lumière (14) et le premier récepteur de lumière associé (26), ainsi que des rayons de surveillance croisés (18b) avec les voisins de premiers émetteurs de lumière (14) et de premiers récepteurs de lumière (26) associés les uns aux autres, et en se basant sur l'interruption d'un rayon de surveillance (18a-b), on conclut à la présence d'un objet,
**caractérisé en ce que**
à l'aide d'au moins un émetteur de lumière supplémentaire (36) qui est agencé dans un intervalle (40) entre deux premiers émetteurs de lumière (14) et/ou à l'aide d'au moins un récepteur de lumière supplémentaire (38) qui est agencé dans un intervalle (40) entre deux premiers récepteurs de lumière (26), on forme d'autres rayons de surveillance croisés (18b) pour augmenter la résolution, et uniquement dans une partie des intervalles (40) on prévoit des émetteurs de lumière supplémentaires (36) et/ou des récepteurs de lumière supplémentaires (38), et
**en ce que** chaque emplacement dépourvu de rayons de surveillance (18a-b) des premiers émetteurs de lumière (14) et des premiers récepteurs de lumière (26) est frappé par l'un au moins des rayons de surveillance (18b) formés en supplément par les émetteurs de lumière supplémentaires (36) et/ou par les récepteurs de lumière supplémentaires (38), au milieu entre les premiers émetteurs de lumière (14) et les premiers récepteurs de lumière (26), et la résolution de la grille lumineuse (10) est ainsi augmentée par un petit nombre seulement de composants supplémentaires.
